# EUROPEAN PATENT SPECIFICATION

(11) **EP 2 108 876 B1**
(45) Date of publication and mention of the grant of the patent: **26.02.2014**
(21) Application number: 09251048.6
(22) Date of filing: 07.04.2009
(51) Int. Cl.: F16M 1/00

(54) **Rain water entering prevention structure**
Struktur zum Schutz vor dem Eindringen von Regenwasser
Structure pour la prévention d'entrée d'eau de pluie

(30) Priority: 07.04.2008 JP 2008099537
(43) Date of publication of application: 14.10.2009
(73) Proprietor: Denyo Co., Ltd., Chuo-ku Tokyo 103-8566 (JP)
(72) Inventor: Yamaguchi, Takeshi, Mikatakaminaka-gun Fukui, 919-1397 (JP)
(74) Representative: Gardiner, Stephen Robin

(56) References cited:
- EP-A1- 0 903 488
- WO-A1-97/00739
- DE-A1- 2 042 965
- US-A- 3 226 947
- US-A- 4 136 432
- US-A1- 2007 152 126

## Description

### BACKGROUND OF THE INVENTION

### 1. FIELD OF THE INVENTION

The present invention relates to a rain water entering prevention structure of an engine-driven work machine, and the rain water entering prevention structure for preventing rain water from flowing in a leaking substance reservoir.

### 2. DESCRIPTION OF THE RELATED ART

As a base of an engine-driven work machine, a technology related to a conveying stand is disclosed in Japanese Patent No. 3300923. In the conveying stand disclosed in the Japanese Patent No. 3300923 is formed a depression, and therein a large fuel tank is installed. Moreover, a bottom portion of the depression is made a water-tight structure, shields a leaking substance of the engine-driven work machine, thereby forms a leaking substance reservoir, and prevents the leaking substance from leaking outside.

However, with respect to the technology disclosed in the Japanese Patent No. 3300923, it is not considered to handle rain water entering inside a housing of the engine-driven work machine from an outside.

Because the engine-driven work machine sucks outside air by an engine fan, blows the air to a heat exchanger such as a radiator, and thereby makes the air cooling air, it is not possible to stop the machine until cooling in the heat exchanger is completed, for example, even if weather suddenly changes and it rains.

Then when an operation of the engine-driven work machine is continued in a raining condition, rain water enters in some cases from an opening such as an air exhaust outlet formed in the housing, and a gap formed in an opening and closing portion of the housing or in a sheet-metal mating face

With respect to the technology disclosed in the Japanese Patent No. 3300923, a region with a capacity over a total amount of a leaking substance of the engine-driven work machine such as a coolant, engine lubrication oil, and operation lubrication oil is ensured as the leaking substance reservoir. However, as described above, when rain water enters inside the housing from the opening or the gap formed in the housing and flows in the leaking substance reservoir, the rain water mixes with the leaking substance from the engine-driven work machine, a total amount of the leaking substance exceeds a capacity of the reservoir, and the leaking substance overflows from the reservoir.

Then the leaking substance overflowing from the leaking substance reservoir leaks out from the engine-driven work machine and influences an outside environment in some cases.

US 4,136,432 describes a mobile electric power generating system in which a recess is provided around an exhaust pipe, the recess having a drain through which rainwater can be drained from the recess.

Consequently, there is a need for providing a rain water entering prevention structure of an engine-driven work machine for preventing rain water from flowing in a leaking substance reservoir.

### SUMMARY OF THE INVENTION

The present invention provides a rain water entering prevention structure of an engine-driven work machine according to the subject-matter of claims 1 and 6.

With respect to a rain water entering prevention structure of an engine-driven work machine of the present invention, a housing is fixed to a base which the housing accommodates an engine arranged on one side of the base, and a work machine-main-body arranged on the other side of the base and driven by the engine; the base comprises a leaking substance reservoir including a floor plate and a depression surrounded by frame members provided around the floor plate; and the structure is characterised by comprising drain members, which discharge rain water outside the housing, below any of an opening and a gap formed in the housing without making the rain water, which enters inside the housing from any of the opening and the gap, flow in the leaking substance reservoir.

According to such an invention, it is possible to discharge rain water outside the housing without making the rain water, which enters inside the housing, flow in the leaking substance reservoir.

Furthermore, with respect to the present invention, the drain members comprises: water receivers configured to receive rain water entering inside the housing from any of the opening and the gap so as not to make the rain water flow in the leaking substance reservoir; and a drain port configured to discharge the rain water received by the water receivers outside the housing.

According to such an invention, it is possible for the drain members to receive rain water entering inside the housing by the water receivers so as not to make the rain water flow in the leaking substance reservoir, to prevent the rain water from flowing in the leaking substance reservoir, and to discharge the rain water received by the water receivers outside the housing.

Furthermore, with respect to the present invention, the drain members are provided below any of the opening and the gap on the one side of the base, and the drain port discharges rain water received by the water receivers toward the one side of the base.

According to such an invention, it is possible to discharge rain water to one side of the base without making the rain water flow in the leaking substance reservoir, wherein the rain water enters inside the housing from the one side where the engine is arranged.

Furthermore, with respect to the present invention, the drain members are provided below any of the opening and the gap on the other side of the base, and the drain port discharges rain water received by the water receivers toward the other side of the base.

According to such an invention, it is possible to discharge rain water to the other side of the base without making the rain water flow in the leaking substance reservoir, wherein the rain water enters inside the housing from the other side where the work machine-main-body is arranged.

Furthermore, with respect to the present invention, in the housing a side face between the one side and the other side of the base opens and closes above the frame member, and thereby, forms an opening and closing door; in the frame member a member presenting an approximately U-letter shape is open on an upper side of the member and is extendedly provided from the one side to the other side of the base; thereby, an locking portion is formed so as to lock the door at a closing position; and at least one of ends of the locking portion is positioned above the water receiver of the drain member.

According to such an invention, by making rain water stay in the opening of the locking portion configured to lock at the closing position the opening and closing door provided on the side face between one side and the other side of the base, it is possible to prevent the rain water from flowing in the leaking substance reservoir and to receive the rain water flowing through the locking portion by the water receiver of the drain member.

Furthermore, the present invention is a rain water entering prevention structure of an engine-driven work machine having a housing which accommodates an engine, a fuel tank for supplying fuel to the engine and a work machine-main-body driven by the engine; and where an exhaust outlet, a depression groove in which a hook member is arranged, and a depression in which a fuel supply port for filling the fuel in the fuel tank is open are formed in a ceiling of the housing, wherein the depression groove is formed to extend from one end to the other end across the ceiling, and the exhaust outlet and the depression are formed at positions across the depression groove from each other.

According to such an invention, it is possible to discharge rain water through the depression groove where the hook member is arranged without making the rain water, which stays in the depression formed in the ceiling of the housing, reach the exhaust outlet.

Furthermore, with respect to the present invention, the depression communicates with the depression groove.

According to such an invention, it is possible to positively discharge rain water in the depression of the fuel supply port to the depression groove.

Furthermore, with respect to the present invention, the depression groove is formed more deeply than the depression.

According to such an invention, it is possible to efficiently discharge rain water staying in the depression to the depression groove.

In accordance with the rain water entering prevention structure related to the present invention, it is possible to discharge rain water, which enters inside the housing of an engine-driven work machine, outside the housing without making the rain water flow in the leaking substance reservoir. Accordingly, even if rain water enters inside the housing, it does not flow in the leaking substance reservoir.

Furthermore, in the rain water entering prevention structure related to the invention are included the drain members which can receive rain water entering inside the housing so that the rain water directs toward an inside of the frame members and can prevent the rain water from flowing in the leaking substance reservoir. Then the drain port is formed in the drain member, and it is possible to discharge rain water received by the water receiver outside the housing from the drain port. Accordingly, it is possible to receive rain water entering inside the housing by the water receivers, and the rain water is not left as it is in a state of staying in the water receivers and does not flow in the leaking substance reservoir.

Furthermore, in accordance with the rain water entering prevention structure related to the invention, the drain members are provided on one side of the base where the engine is arranged, and on the other side of the base where the work machine-main-body is arranged. By providing the drain member on the one side of the base, it is possible to discharge rain water, which enters inside the housing from the one side of the base, to the one side without making the rain water flow in the leaking substance reservoir. Moreover, by providing the drain member on the other side of the base, it is possible to discharge rain water, which enters inside the housing from the other side of the base, to the other side without making the rain water flow in the leaking substance reservoir. Accordingly, rain water entering inside the housing from one side and the other side of the base does not flow in the leaking substance reservoir.

Furthermore, in accordance with the rain water entering prevention structure related to the invention, the locking portion of the opening and closing door provided in the housing is formed of a member whose section is an approximately U-letter shape. Then the upside of the locking portion is made open and the portion is fixed to the frame member, and the end of the portion is arranged above the water receiver of the drain member. Accordingly, rain water entering inside the housing from the opening and closing door does not flow in the leaking substance reservoir because it stays in the opening of the approximately U-letter shape of the locking portion. Furthermore, even if rain water flows through the opening of the U-letter shape, it does not flow in the leaking substance reservoir because it drops in the water receiver of the drain member from the end of the locking portion.

Furthermore, in accordance with the rain water entering prevention structure related to the invention, the exhaust outlet formed in the ceiling of the housing, and the depression where the fuel supply port is open are formed at positions across the depression groove with each other. According to this configuration, even if rain water staying in the depression overflows therefrom, the overflowing rain water does not reach the exhaust outlet because it flows in the depression groove. Accordingly, the rain water overflowing from the depression does not enter inside the housing from the exhaust outlet and does not flow in the leaking substance reservoir formed inside the housing.

Moreover, it is possible to utilize the depression groove conventionally formed in order to attach the hook member, and it is not necessary to newly form a depression groove for the rain water entering prevention structure.

Furthermore, in accordance with the rain water entering prevention structure related to the invention, the depression formed in the ceiling of the housing and where the fuel supply port is open communicates with the depression groove formed across one end to the other end of the ceiling. Moreover, the depression groove is formed more deeply than the depression where the fuel supply port is open. According to this configuration, rain water entering in the depression where the fuel supply port is open does not stay and flows in the depression groove, and is discharged through the groove without entering inside the housing.

Accordingly, rain water does not flow in the leaking substance reservoir formed inside the housing.

As thus described, according to the present invention, it is possible to provide the rain water entering prevention structure of an engine-driven work machine configured to prevent rain water from flowing in the leaking substance reservoir.

### BRIEF DESCRIPTION OF THE DRAWINGS

FIG. 1 is a drawing showing an engine-driven work machine comprising an environment adaptive base related to an embodiment of the present invention.
FIG. 2A is a perspective view of the environment adaptive base; FIG. 2B is an X1-X1 section view in FIG. 2A.
FIG. 3 is an X2-X2 section view in FIG. 2A.
FIG. 4 is a drawing showing a housing of the engine-driven work machine.
FIG. 5 is a drawing showing a front face side of the environment adaptive base.
FIG. 6 is a schematic drawing showing a water flow on the front face side of the environment adaptive base.
FIG. 7 is a drawing showing a rear face side of the environment adaptive base.
FIG. 8 is a drawing showing a fuel supply portion.
FIG. 9 is a drawing showing a locking portion.
FIG. 10 is an X4-X4 section view in FIG. 9.

### BEST MODE(S) FOR CARRYING OUT THE INVENTION

Here will be described a best mode for carrying out the present invention in detail, referring to drawings as needed.

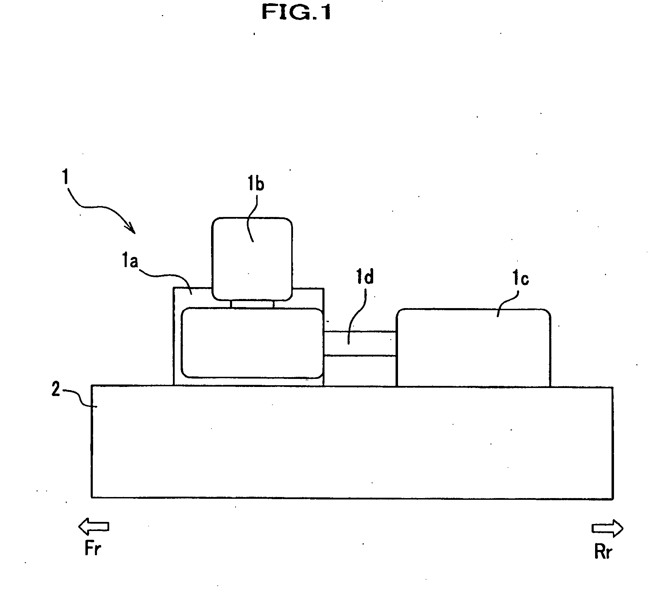

FIG. 1 is a drawing showing an arrangement of main devices of an engine-driven work machine comprising an environment adaptive base related to the embodiment, omitting a housing of the machine. As shown in FIG. 1, with respect to an engine-driven work machine 1 of the embodiment, an engine 1a and a work machine-main-body 1c is fixed to an environment adaptive base 2. Then it is configured that an output shaft 1d for outputting a rotation of the engine 1a and the work machine-main-body 1c are connected, and the work machine-main-body 1c is driven by the rotation of the engine 1a.

In addition, the work machine-main-body 1c is, for example, a generator.

A fuel tank 1b is connected to the engine 1a, and supplies fuel such as diesel fuel to the engine 1a. Other than these, although not shown, to the environment adaptive base 2 are fixed a controller for controlling drive of the engine 1a and the work machine-main-body 1c; a device for controlling fuel supply to the engine 1a and an engine cooling device (hereinafter referred to auxiliary equipment as a whole); and the like.

In addition, with respect to a description below, in the engine-driven work machine 1, a side where the engine 1a is arranged, that is, "one side" recited in claims is made a front face Fr; and a side where the work machine-main-body 1c is arranged, that is, "the other side" recited in claims is made a rear face Rr.

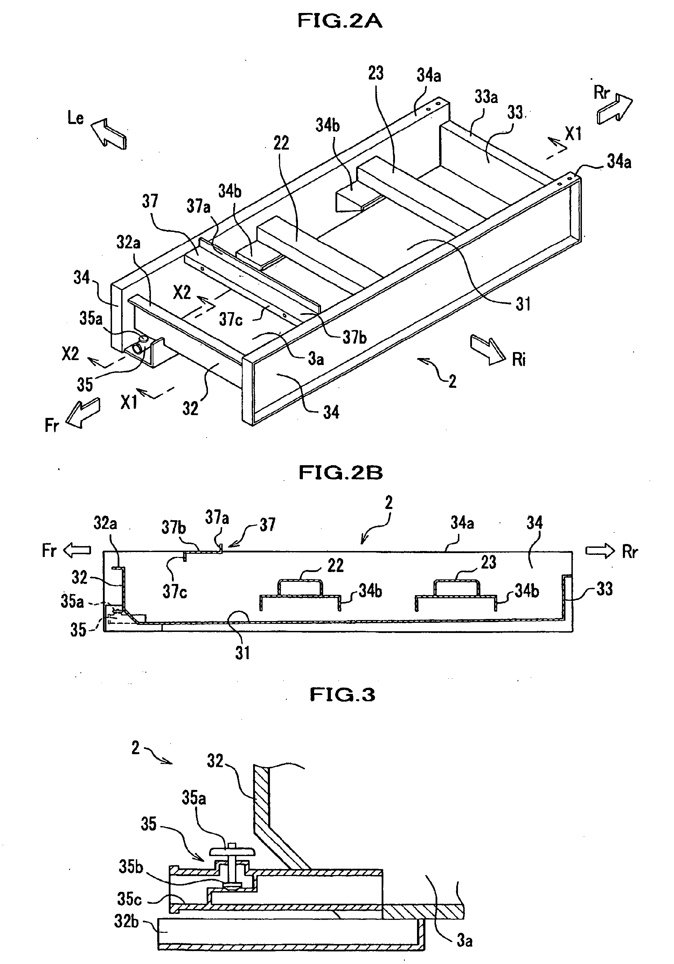

FIGS. 2A and 2B are drawings showing the environment adaptive base; FIG. 2A is a perspective view of the environment adaptive base; and FIG. 2B is an X1-X1 section view in FIG. 2A.

Here, also in the environment adaptive base 2 similarly to the engine-driven work machine 1 (see FIG. 1), the side where the engine 1a (see FIG. 1) is arranged is made the front face Fr; and the side where the work machine-main-body 1c (see FIG. 1) is arranged is made the rear face Rr. Furthermore, seen from the front face Fr side, a left face Le and a right face Ri are defined. Moreover, in some cases the left face Le and the right face Ri are called both side faces as a whole. Then a length between the both side faces is called a width; a length from the front face Fr to the rear face Rr is called a depth.

As shown in FIG. 2A, the environment adaptive base 2 is a box-like member whose upside is open; both ends of a member including rectangular, for example, sheet metal are approximately perpendicularly bent and raised, a front face portion 32 and a rear face portion 33 are formed, and a bottom face portion 31 (floor plate) is formed between them. Moreover, side face portions 34, 34 are fixed to ends of a left face Le side and a right face Ri side of the bottom face portion 31, the front face portion 32, and the rear face portion 33, and thus a box-like shape whose upper face is open is formed. Here, "frame members" recited in claims are formed of the front face portion 32, the rear face portion 33, and the side face portions 34, 34.

The side face portion 34, 34 are a member whose section is, for example, an approximately left-open rectangle. Then the bottom face portion 31 of the environment adaptive base 2 is positioned between the side face portions 34, 34, and they are fixed to the ends of the bottom face portion 31, the front face portion 32, and the rear face portion 33 (see FIG. 2A) by continuous welding and the like; thus the base 2 is configured where an bottom face portion 31 is a water-tight structure. Thus by the bottom face portion 31 being the water-tight structure, it is possible to form a leaking substance reservoir 3a in the bottom face portion 31 of the environment adaptive base 2. Then by reserving a leaking substance in the leaking substance reservoir 3a, it is possible to prevent a liquid leaking substance from leaking outside the environment adaptive base 2.

In addition, both ends of each of the side face portions 34, 34 are bent and raised, and thereby, a shallow box is formed and a strength of the portions 34, 34 may be heightened.

An upper end of the front face portion 32 is folded toward an outside of the environment adaptive base 2, and an upper face portion 32a approximately parallel to the bottom face portion 31 is formed. Similarly, an upper end of the rear face portion 33 is folded toward the outside of the environment adaptive base 2, and an upper face portion 33a is formed. Furthermore, in each of the side face portions 34, 34 is formed an upper face portion 34a on the upper end side of the left-open rectangle.

Then in the embodiment the upper face portion 32a of the front face portion 32 and the upper face portion 33a of the rear face portion 33 are formed lower than the upper face portions 34a, 34a of the side face portions 34, 34 in an up-and-down direction thereof.

Furthermore, in the environment adaptive base 2 are provided an engine fixation seat 22 configured to fix the engine 1a (see FIG. 1) and a work machine-main-body fixation seat 23 configured to fix the work machine-main-body 1c (see FIG. 1).

The engine fixation seat 22 is formed by horizontally hanging, for example, a bar, whose section is a left-open rectangle, between the side face portions 34, 34 in approximately parallel to the front face portion 32 and the rear face portion 33; and by directing an opening of the left-open rectangle downward and being fixed. The engine 1a is placed on the engine fixation seat 22, and is fixed by a proper means such as a bolt and nut (not shown) through a rubber pad.

The work machine-main-body fixation seat 23 is formed by horizontally hanging, for example, a bar whose section is a left-open rectangle between the side face portions 34, 34 so as to be parallel to the engine fixation seat 22; and by directing an opening of the left-open rectangle downward and being fixed. The work machine-main-body 1c (see FIG. 1) is placed on the work machine-main-body fixation seat 23, and is fixed by a proper means such as a bolt and nut (not shown) through a rubber pad.

Methods for fixing the engine fixation seat 22 and fixing the work machine-main-body fixation seat 23 are not limited. It may be available to protrude seat portions 34b toward an inside of the environment adaptive base 2 from one of the side face portions 34, 34, for example, as shown in FIG. 2A, and to fix the engine fixation seat 22 and the work machine-main-body fixation seat 23 to the seat portions 34b, respectively, by a screw, welding, and the like.

Or it may also be available to directly fix the engine fixation seat 22 and the work machine-main-body fixation seat 23 to the side face portion 34 by a screw, welding, and the like.

Moreover, in the environment adaptive base 2 is provided a guide base 37. The guide base 37 is horizontally hung between the side face portions 34, 34 so as to be approximately parallel to the engine fixation seat 22, and is provided on a more front face side than the seat 22.

As shown in FIG. 2B, in the guide base 37 both ends of a flat face portion 37b are approximately perpendicularly bent to reverse sides with each other, and thereby, raised portions 37a, 37c are formed. Then, the guide base 37 is provided so that: the flat face portion 37b is approximately parallel to the bottom face portion 31; is a height approximately equal to the upper face portions 34a of the side face portions 34, 34; and the raised portion 37c bent downward is on the front face Fr side.

That is, the raised portion 37a bent upward is provided, protruding upper than the upper face portions 34a, 34a of the side face portions 34, 34. Moreover, in the environment adaptive base 2 is provided the guide base 37 so that a lower end of the raised portion 37c bent downward is upper than the upper face portion 32a of the front face portion 32.

Both left and right ends of the flat face portion 37b and raised portion 37c of the guide base 37 are sandwiched by the side face portions 34, 34, and are fixed, for example, by continuous welding. Thus both ends of the guide base 37 in a longitudinal direction are continuously welded to the side face portions 34, 34, and thereby, a water-tight structure is formed between the guide base 37 and the side face portions 34, 34.

Furthermore, as shown in FIG. 2B, a drain cock 35 is provided below the front face portion 32 (on a bottom face portion 31 side) of the environment adaptive base 2.

FIG. 3 is an X2-X2 section view in FIG. 2A. A structure of the drain cock 35 is not limited, and for example as shown in FIG. 3, it is possible to consider a structure of opening and closing a cylindrical discharge pipe 35c configured to penetrate the front face portion 32 by a rotation of a valve body 35b provided in the pipe 35c. If the valve body 35b is made a structure of integrally rotating together with a cock lever 35a provided outside the discharge pipe 35c, it is possible to open and close the pipe 35c by, for example, manually operating the lever 35a. Then, by opening the discharge pipe 35c, the leaking substance reservoir 3a and an outside communicate, and it is possible to discharge a leaking substance reserved in the reservoir 3a outside the environment adaptive base 2.

In addition, there may also be available a structure of a tray 32b being provided below the drain cock 35. The tray 32b is assumed in its structure to fix a member, for example, whose section is an approximately L-letter shape, to the bottom face portion 31 so that one of the side face portions 34, 34 forms one side wall and an end of the portion 31 protrudes more than the front face portion 32 from an end of the drain cock 35. By having the tray 32b of such a structure, even if there exists a leaking substance leaking out from the drain cock 35, it is possible to receive the leaking substance by the tray 32b and to prevent a surrounding environment, where the environment adaptive base 2 is installed, from being contaminated.

Furthermore, as shown in FIG. 3, the drain cock 35 may be fixed so that at least a lowest portion inside the discharge pipe 35c is located at a position equivalent to or lower than an upper face of the bottom face portion 31 (see FIG. 2A). Thus fixed, it is possible to prevent a leaking substance from staying at a boundary between the bottom face portion 31 and the drain cock 35, and to completely discharge the leaking substance reserved in the leaking substance reservoir 3a.

Conventionally, in some cases the engine-driven work machine 1 (see FIG. 1) is configured so that: a base where the engine 1a (see FIG. 1) and the work machine-main-body 1c (see FIG. 1) are fixed, and a base platform where the leaking substance reservoir 3a is formed are formed as separate members; and the base is fixed to the base platform so as to be placed thereon.

The environment adaptive base 2 of the embodiment has a function equivalent to a conventional case of the base platform and the base being integrally configured.

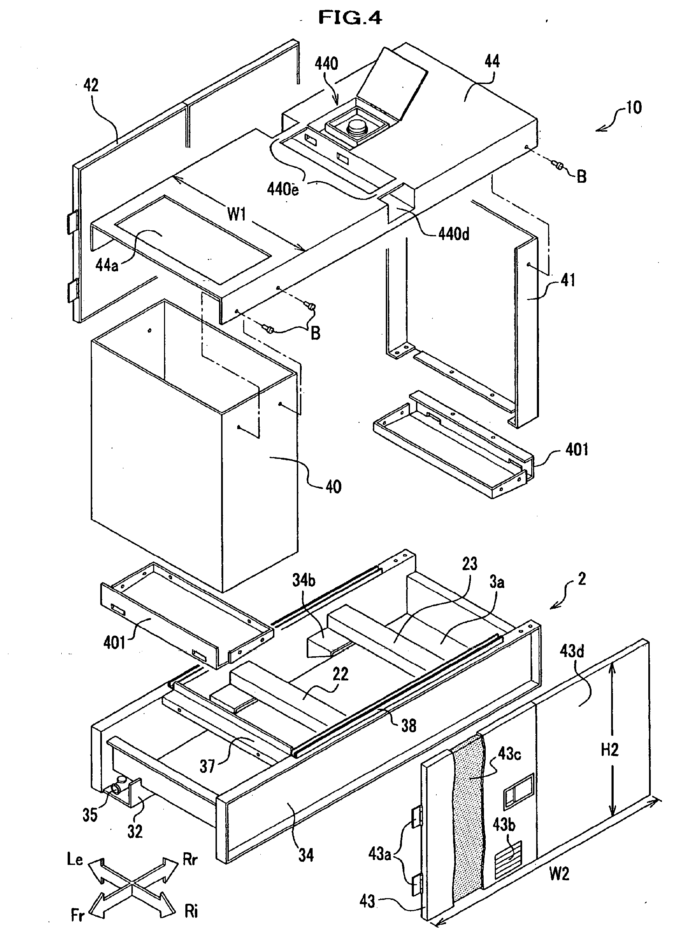

FIG. 4 is a drawing showing a housing of the engine-driven work machine. With respect to the engine-driven work machine 1 (see FIG. 1) of the embodiment, a housing 10 is configured with a front frame 40, a rear frame 41, a left frame 42, a right frame 43, and an upper frame 44 which are fixed to the environment adaptive base 2.

As shown in FIG. 4, on a front face Fr side of the environment adaptive base 2 is arranged the front frame 40; on a rear face Rr side is arranged the rear frame 41.

Then on the left face Le and right face Ri sides of the front frame 40 and the rear frame 41 are arranged the left frame 42 and the right frame 43, respectively.

Moreover, the upper frame 44 is provided so as to cover the front frame 40, the rear frame 41, the left frame 42, the right frame 43, and the upper frame 44 from above.

The front frame 40, the rear frame 41, the left frame 42, the right frame 43, and the upper frame 44 are mutually joined and form the housing 10, and the housing 10 is fixed to the environment adaptive base 2.

At this time, a gap is formed at joints of the front frame 40, the rear frame 41, the left frame 42, the right frame 43, and the upper frame 44, and rain water enters inside the housing 10 in some cases.

Furthermore, with respect to the upper frame 44, an exhaust outlet 44a is open at a position corresponding to an upper side of the front frame 40, and an opening is formed above the frame 40 formed into a hollow rectangle tube form.

Because the exhaust outlet 44a is open upward, rain water enters in the hollow portion of the front frame 40 from the outlet 44a, and enters inside the housing 10 through the hollow portion.

Accordingly, in order to discharge rain water outside entering from an opening such as the exhaust outlet 44a formed in the housing 10 and a gap formed in the joints, drain guides 401 are provided on the front face Fr and rear face Rr sides of the environment adaptive base 2, respectively.

The drain guides 401 have a function of preventing rain water from entering the leaking substance reservoir 3a (see FIG. 2A) of the environment adaptive base 2.

In addition, in the upper frame 44 are formed a depression groove 440d configured to arrange a hook member not shown, connection members 440e hung across an upper face of the groove 440d, and a fuel supply portion 440; a detail thereof will be described later.

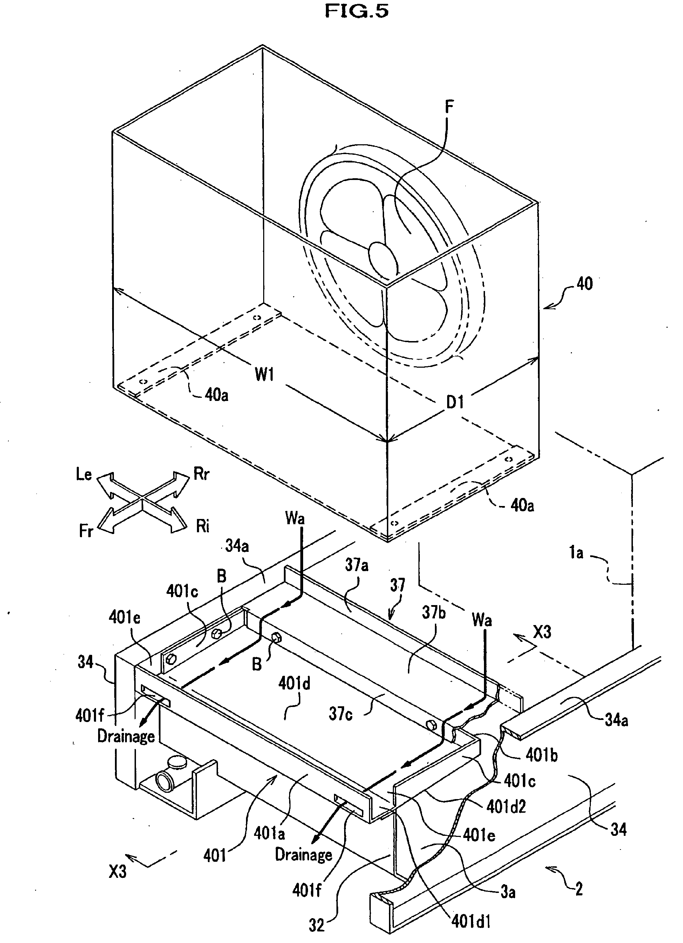

FIG. 5 is a drawing showing a front face side of the environment adaptive base.

As shown in FIG. 5, the drain guide 401 is a member like a shallow box of an approximate rectangle, and a bottom 401d of the guide 401 is formed into an approximate rectangle in plan view.

A width of the bottom 401d in a left-and-right direction is formed to be equal to a distance between the side face portions 34, 34 (see FIG. 2A) of the environment adaptive base 2, one end of the direction is raised and a side wall 401a is formed.

The bottom 401d is bent and raised from a position away from the side wall 401a by a minute angle in a direction same as the side wall 401a, and a slant portion 401d2 is formed. In addition, a space between the side wall 401a and a starting point of the slant portion 401d2 is called a flat portion 401d1.

Moreover, at an end of the side wall 401a of the flat portion 401d1 is formed at least one drain port 401f.

Both ends of the slant portion 401d2 of the bottom 401d are raised and side walls 401c, 401c are formed. Moreover, an end of the bottom 401d opposed to the side wall 401a is raised and a side wall 401b is formed.

Thus the drain guide 401 is formed, and notches 401e, 401e are provided between the side wall 401a and the side walls 401c, 401c, respectively.

As shown in FIG. 5, with respect to the drain guide 401, the side wall 401a is arranged on the front face Fr side; the flat portion 401d1 is provided so as to be placed on the upper face portion 32a (see FIG. 2A) of the front face portion 32, and is fixed (not shown) to the portion 32a by a screw member and the like.

Or the flat portion 401d1 may be fixed to the upper face portion 32a by welding and the like.

Because the width of the bottom 401d of the drain guide 401 is formed to be equal to the distance between the side face portions 34, 34, the side walls 401c, 401c contact the side face portions 34, 34, and are fixed to the portions 34, 34 by bolts B and a fastening member such as nuts not shown.

Or the side walls 401c, 401c may be fixed to the side face portions 34, 34, respectively, by welding and the like.

Furthermore, the side wall 401b of the drain guide 401 overlaps the raised portion 37c of the guide base 37 from the rear face Rr side, and is fixed to the portion 37c by the bolts B and a fastening member such as nuts not shown.

Or the side wall 401b may be fixed to the raised portion 37c by welding and the like.

Moreover, on the front face Fr side of the environment adaptive base 2 is arranged the front frame 40 as described above.

As shown in FIG. 5, the front frame 40 is like a hollow rectangle tube member whose up and down are penetrated; a width W1 is approximately equal to a width (length between ends of the upper face portions 34a, 34a of the side face portions 34, 34) of the environment adaptive base 2, and a depth D1 is formed to be approximately equal to a length from a front end of each of the side face portions 34, 34 to the raised portion 37a of the guide base 37.

Then the front frame 40 is placed on a plane formed by the upper face portions 34a, 34a of the side face portions 34, 34, and the flat face portion 37b of the guide base 37, and is fixed to the environment adaptive base 2.

That is, the guide base 37 and the drain guide 401 are arranged below the front frame 40. Moreover, as shown in FIG. 4, because the exhaust outlet 44a is open at a position corresponding to the upper side of the upper frame 44 and an opening is formed above the front frame 40, the guide base 37 and drain guide 401 of a drain member are configured to be arranged below the opening.

A fixation method of the front frame 40 is not limited, and for example, it may be available to fold a lower end thereof inside in a depth direction, to thereby form fixation portions 40a and place them on the upper face portions 34a, 34a of the side face portions 34, 34, respectively, and to fix the portions 40a and the portions 34a, 34a, respectively, by a fastening member such as bolts not shown.

In the front frame 40 are provided the engine 1a fixed to the environment adaptive base 2 and an engine fan F configured to cool the work machine-main-body 1c (see FIG. 1), and the hollow portion of the frame 40 forms an exhaust air duct. Therefore, the upper end of the front frame 40 cannot be completely shielded, the exhaust outlet 44a is, as shown in FIG. 4, open to the upper frame 44 above the frame 40. Because of this, in some cases, for example, rain water enters in the hollow portion of the front frame 40 from the exhaust outlet 44a of the upper frame 44, and enters inside the housing 10 (see FIG. 4) through the hollow portion.

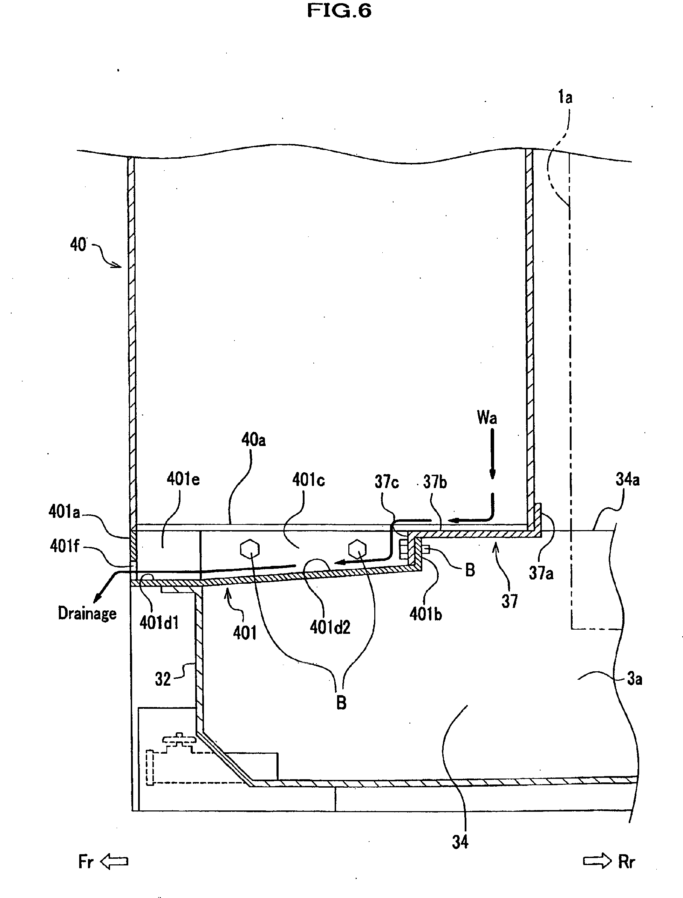

FIG. 6 is a schematic drawing showing a water flow on the front face side of the environment adaptive base. With reference to FIG. 6 will be described a flow of water Wa such as rain water entering inside the housing 10 (see FIG. 4) from the front face Fr side of the engine-driven work machine 1 (see FIG. 1) through the hollow portion of the front frame 40.

As described above, because the front frame 40 is a hollow member in the up-and down direction thereof, the water Wa such as rain water enters inside the housing 10 (see FIG. 4) through the hollow portion of the front frame 40.

As shown in FIG. 6, because the guide base 37 and drain guide 401 are arranged below the front frame 40, the water Wa such as rain water entering inside the housing 10 from the hollow portion of the front frame 40 is received by any one of the flat face portion 37b of the base 37 and the bottom 401d of the drain guide 401 (flat portion 401d1, slant portion 401d2).

That is, the flat face portion 37b of the guide base 37, and the bottom 401d of the drain guide 401 (flat portion 401d1, slant portion 401d2) are a "water receiver" recited in claims.

As described above, because the ends of the guide base 37 form a water-tight structure by being continuously welded with the side face portions 34, 34, the water Wa flowing in the drain guide 401 and the water Wa received by the slant portion 401d2 flow through the portion 401d2, and reach the flat portion 401d1. Because the side walls 401c, 401c are formed on both ends of the slant portion 401d2, the water Wa flowing through the portion 401d2 does not enter in spaces between the both ends of the portion 401d2 and the side face portions 34, 34.

Then the water Wa having reached the flat portion 401d1 is discharged to the front face Fr side as drainage from drain ports 401f formed in the side wall 401a.

Thus the water Wa such as rain water received by the flat face portion 37b of the guide base 37 and the slant portion 401d2 and flat portion 401d of the drain guide 401 is discharged as drainage outside the environment adaptive base 2, and does not flow in the leaking substance reservoir 3a.

In addition, when the notches 401e (see FIG. 5) are formed on a more rear face Rr side than the front face portion 32, because the water Wa flows in the rear face Rr, that is, the leaking substance reservoir 3a from the portion 32, the notches 401e are not preferably formed on the more rear face Rr side than the portion 32.

According to such a structure, it is possible to prevent the water Wa such as rain water, which enters inside the housing 10 from the front face Fr side of the environment adaptive base 2 (see FIG. 4), from flowing in the leaking substance reservoir 3a.

As described above, because the water Wa entering in the front face Fr side from the flat face portion 37b of the guide base 37 is received by the portion 37b of the base 37 and the flat portion 401d1 and slant portion 401d2 of the drain guide 401, and is discharged without flowing in the leaking substance reservoir 3a of the environment adaptive base 2, the water Wa such as rain water entering from the upper end of the front frame 40 is discharged without flowing in the reservoir 3a. Accordingly, the guide base 37 and the drain guide 401 are a "drain member" recited in claims.

Furthermore, as shown in FIG. 4, the rear frame 41 is fixed to the rear face Rr side of the environment adaptive base 2.

The rear frame 41 includes a member whose section is, for example, an approximately left-open rectangle; the frame 41 is raised and fixed so that an open side of the left-open rectangle is the front face Fr side, and a height of the frame 41 is formed to be equivalent to that of the front frame 40.

Then, as shown in FIG. 4, the drain guide 401 is fixed to the rear face Rr side of the environment adaptive base 2 of the embodiment.

A structure of the drain guide 401 on the rear face Rr side in the environment adaptive base 2 is approximately equivalent to that of the guide 401 on the front face Fr side other than the side wall 401b (see FIG. 5) is not fixed to the raised portion 37c (see FIG. 5) of the guide base 37; therefore, a detailed description thereof will be omitted.

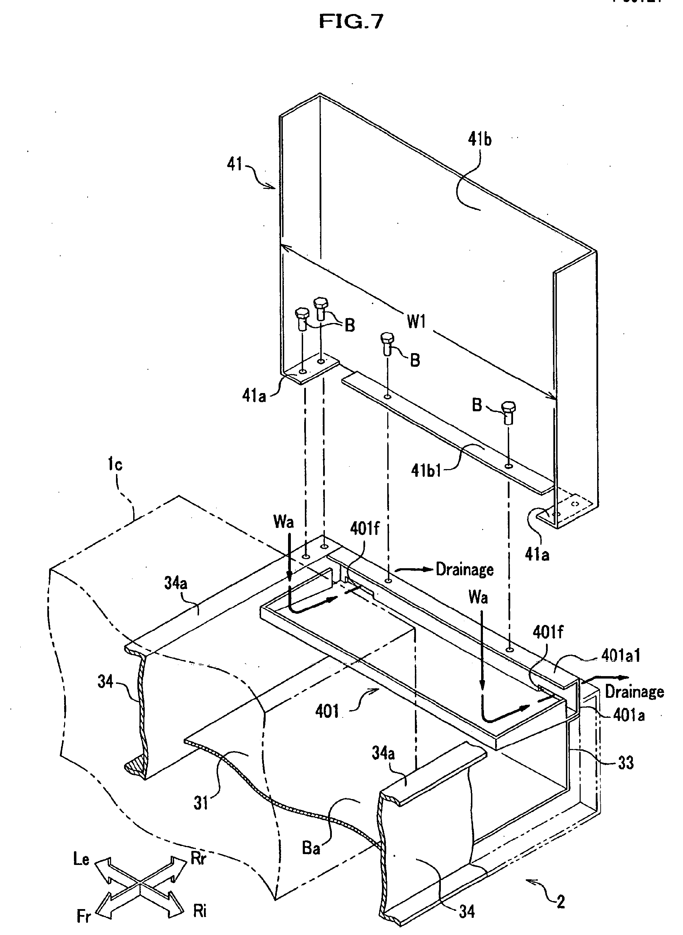

FIG. 7 is a drawing showing a rear face side of the environment adaptive base.

As shown in FIG. 7, the width W1 of the rear frame 41 is formed to be approximately equal to a width of the environment adaptive base 2. Then side faces of the left-open rectangle of the rear frame 41 are folded inside on lower ends thereof, and fixation portions 41a are formed.

The rear frame 41 is arranged so that the fixation portions 41a are placed on the upper face portions 34a, 34a of the side face portions 34, 34, respectively, and the portions 41a and the portions 34a, 34a are fastened and fixed, for example, by the bolts B and nuts not shown.

Furthermore, as shown in FIG. 7, with respect to the drain guide 401 provided on the rear face Rr side of the environment adaptive base 2, an upper end of the side wall 401a may be folded toward a bottom portion 401d side, and an upper face portion 401a1 may be formed. Then a lower end of a bottom portion 41b of the left-open rectangle of the rear frame 41 is folded inside, a fixation portion 41b1 is formed, the portion 41b1 is placed on the upper face portion 401a1, and the portion 41b1 and the portion 401a1 are fastened and fixed, for example, by the bolts B and nuts not shown.

Thus, by fixing the fixation portion 41b1 and the upper face portion 401a1, it is possible to surely fix the rear frame 41 to the environment adaptive base 2.

As shown in FIG. 7, when the rear frame 41 is fixed to the environment adaptive base 2, a whole of the frame 41 is configured to be provided above the drain guide 401.

That is, the drain guide 401 of a drain member is arranged below a gap not shown and formed at joints between the rear frame 41 and other members (for example, the upper frame 44 (see FIG. 4), the left frame 42 (see FIG. 4), the right frame 43 (see FIG. 4)) configuring the housing 10 (see FIG. 4). Then all of the water Wa entering from a gap formed at joints of the housing 10 is received by the drain guide 401, and is discharged as drainage from the drain ports 401f to the rear face Rr side. According to this structure, it is possible to prevent the water Wa such as rain water, which enters from the gap formed at the joints of the housing 10, from flowing in the leaking substance reservoir 3a.

The left frame 42 shown in FIG. 4 is, for example, a sheet-form member, and is provided so as to form a side face of the left face Le of the engine-driven work machine 1 where the front frame 40 and the rear frame 41 are fixed.

With respect to the left frame 42, for example, an end of the front face Fr side is fixed to the front frame 40 by a fastening member such as a bolt and nut not shown, and an end of the rear face Rr side is fixed to the rear frame 41 by a fastening member such as a bolt and nut not shown.

Moreover, as shown in FIG. 4, the upper frame 44 is provided at an upper portion of the engine-driven work machine 1.

The upper frame 44 is provided, facing the environment adaptive base 2, so as to cover the front frame 40, the rear frame 41, and the left frame 43 from above, and forms the ceiling of the housing 10 of the engine-driven work machine 1 (see FIG. 1).

As shown in FIG. 4, the upper frame 44 includes, for example, a member whose section is a left-open rectangle: a length of the frame 44 is formed to be approximately equivalent to a length from the front face Fr side to rear face Rr side of the engine-driven work machine 1; the width W1 of the frame 44 is formed to be approximately equivalent to that of the front frame 40 and the rear frame 41.

The upper frame 44 is provided by directing the opening of the left-open rectangle thereof downward so that the front frame 40 and the rear frame 41 fit in the opening and are fixed to the front frame 40 and the rear frame 41, for example, by a fastening member such as the bolts B and nuts not shown.

The exhaust outlet 44a is open at a position corresponding to the upper side of the front frame 40 on the front face Fr side of the upper frame 44, and exhausts air blowing through the hollow portion of the frame 40 by the engine fan F (see FIG. 5) provided at the frame 40.

Furthermore, in the upper frame 44 the depression groove 440d is formed, for example, so as to traverse the frame 44 from the right face Ri side to the left face Le side.

On an upper face of the depression groove 440d is hung across the connection member 440e including, for example, a steel product, and the upper frame 44 is reinforced.

Then at the depression groove 440d is arranged a hook member not shown, and the member functions as a hook configured to hang, for example, a rope when the engine-driven work machine 1 is carried.

Moreover, at approximate center of the upper frame 44 in a longitudinal direction thereof is formed the fuel supply portion 440 whose fuel supply port 440b for filling fuel in the fuel tank 1b (see FIG. 1) is open.

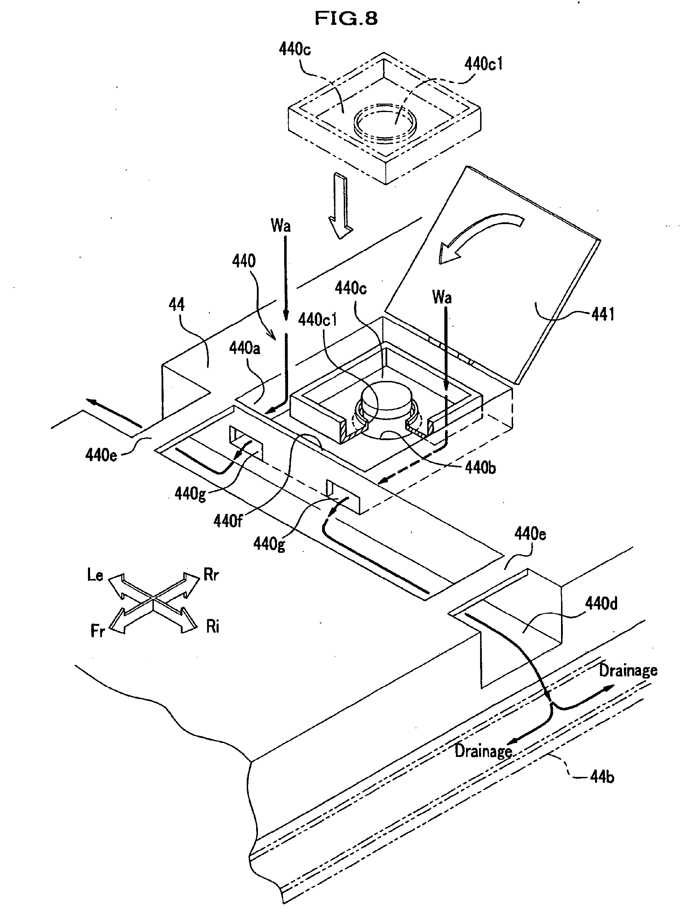

FIG. 8 is a drawing showing a fuel supply portion.

As shown in FIG. 8, with respect to the fuel supply portion 440, a fuel supply port member 440c is fixed to a depression 440a formed by the upper frame 44 being caved in an approximate rectangle, and thus the portion 440 is formed.

In the depression 440a is formed the fuel supply port 440b penetrating the upper frame 44; the fuel supply port member 440c is fixed to the depression 440a so as to cover the port 440b from above.

The fuel supply port member 440c is a member like a shallow box, and an area of its bottom is larger than an opening area of the fuel supply port 440b which is open to the depression 440a of the upper frame 44. Moreover, a fuel supply port opening 440c1 is open to a bottom of the fuel supply port member 440c.

Then the fuel supply port member 440c is fixed to the depression 440a so that the fuel supply opening 440c1 and the fuel supply port 440b of the depression 440a communicate.

A method for fixing the fuel supply port member 440c to the depression 440a is, for example, to continuously weld a circumference of the fuel supply port member 440c and to form a water-tight structure between the member 440c and the upper frame 44.

Then, for example, the fuel supply opening 440c1 communicates with an fuel supply port of the fuel tank 1b (see FIG. 1) through a pipe line not shown.

Moreover, for example, a depth of the fuel supply port member 440c may be formed to be approximately equal to that of the depression 440a. That is, a height of side walls forming the shallow box of the fuel supply port member 440c is assumed to be a height approximately equal to a partition 440f described later.

The depression 440a of the fuel supply portion 440 of the embodiment is formed adjacent to the depression groove 440d, and the groove 440d and the depression 440a are partitioned by the partition 440f. Furthermore, the depression 440a is formed to be shallower than the depression groove 440d, and in the partition 440f is formed at least one drain port 440g so as to communicate with the depression 440a and the groove 440d.

In addition, it may also be configured that the depression 440a and the depression groove 440d communicate without forming the partition 440f.

Moreover, in the embodiment, as shown in FIG. 4, the exhaust outlet 44a , which is open to the upper frame 44, and the depression 440a of the fuel supply portion 440 are formed at positions across the depression groove 440d with each other.

As shown in FIG. 8, because the fuel supply portion 440 formed in the upper frame 44 is formed by the fuel supply port member 440c being fixed to the depression 440a, for example, the water Wa such as rain water stays in the depression 440a in some cases. Then, when an amount of the staying water Wa increases, it flows in the depression grove 440d via the drain ports 440g. In the embodiment, because the depression grove 440d is formed to be deeper than the depression 440a, the water Wa of the depression 440a can flow in the groove 440d without resistance.

In addition, by forming the drain ports 440g so as to contact the bottom of the depression 440a, it is possible to improve an efficiency of draining from the depression 440a.

Then because the depression groove 440d is formed across the right face Ri side to left face Le side of the upper frame 44, the water Wa flowing in the groove 440d flows toward any of the right face Ri side and the left face Le side.

Then the water Wa flowing through the depression groove 440d to ends of the upper frame 44 drops therefrom.

When the water Wa such as rain water stays in the depression 440a of the fuel supply portion 440 and an amount of the water Wa exceeds a capacity of the depression 440a, the water Wa overflows from the depression 440a. Then the water Wa overflowing from the depression 440a flows so as to widen, making it center.

Accordingly, the water Wa overflowing from the depression 440a reaches the exhaust outlet 44a (see FIG. 4) and flows therein, and in some cases, enters inside the housing 10 through the hollow portion of the front frame 40 (see FIG. 4).

Consequently, in the embodiment, as shown in FIG. 4, the exhaust outlet 44a, which is open to the upper frame 44, and the fuel supply portion 440 are formed across the depression groove 440d with each other.

According to this structure, the water Wa overflowing from the depression 440a (see FIG. 8) and directing toward the exhaust outlet 44a flows in the depression groove 440d, and does not reach the outlet 44a. Accordingly, the water Wa overflowing from the depression 440a does not enter inside the housing 10 from the exhaust outlet 44a through the hollow portion of the front frame 40.

In addition, the water Wa such as rain water staying in the depression 440a (see FIG. 8) also flows, in some cases, inside the fuel supply port member 440c (see FIG. 8). However, by forming a protrusion around the fuel supply opening 440c1, it is possible to prevent the water Wa, which flows inside the fuel supply port member 440c, from entering inside the housing 10 (see FIG. 4) from the opening 440c1.

Moreover, as shown in FIG. 8, it is configured to communicate the depression 440a of the fuel supply portion 440 and the depression groove 440d, and to make the water Wa of the depression 440a positively flow in the groove 440d.

According to this structure, the water Wa such as rain water staying in the depression 440a flows in the depression groove 440d, and an amount of the water Wa staying in the depression 440a is reduced. Thus it is possible to reduce an amount of the water Wa overflowing from the depression 440a.

As described above, the water Wa overflowing from the depression 440a flows on the upper face of the upper frame 44 so as to widen, making the depression 440a center. Then the water Wa drops when it reaches ends of the upper frame 44.

That is, it is not possible to specify a position where the water Wa drops from the upper frame 44.

Consequently, it is configured to positively make the water Wa of the depression 440a flow in the depression groove 440d of the upper frame 44 and to make the water Wa drop from a position where the groove 440d is formed.

According to this structure, it is possible to specify a position where the water Wa drops from the upper frame 44.

Accordingly, it is possible to suppress the water Wa from entering inside the housing 10 from a gap formed at the joints of the housing 10 (see FIG. 4), for example, according to such methods of: configuring the housing 10 so that the joints are not formed below the depression groove 440d; and making a water-tight structure by caulking only the joints of the housing 10 located below the groove 440d.

In addition, it is also available in the upper frame 44 to form a water receiving member configured to receive the water Wa dropping from the ends of the frame 44.

As shown in FIG. 8 in chain double-dashed lines, a tub-like water receiving member 44b is formed at a portion of a side wall forming a left-open rectangle of the upper frame 44, wherein the portion is positioned lower than the depression groove 440d, and a member whose section is, for example, an approximate semicircle is attached to the portion from the end of the front face Fr side to that of the rear face Ri side along a longitudinal direction of the upper frame 44 so that an upper side of the member 44b is open.

The water receiving member 44b is formed, for example, by fixing a member made of resin, whose section is an approximately semicircle, to the upper frame 44 along a longitudinal direction thereof with a double-sided tape and the like.

Thus, by forming the tub-like water receiving member 44b, the water Wa flowing through the depression groove 440d to the end of the upper frame 44 drops in the member 44b and is received therein.

Then the water Wa dropping in the water receiving member 44b drops, flowing to any of the end of the front face Fr side and that of the rear face Rr side in the upper frame 44 through the member 44b.

Accordingly, as shown in FIG. 8, by attaching the water receiving member 44b, it is possible to move the water Wa to any of the end of the front face Fr side and that of the rear face Rr side where the water Wa does not enter inside the engine-driven work machine 1 (see FIG. 1), and to suppress the water Wa from entering inside the housing 10 (see FIG. 4).

In addition, the right face Ri side is shown in FIG. 8, and the water receiving member 44b may be similarly attached to the left face Le side.

Furthermore, for example, as shown in FIG. 8, an opening and closing lid 441 configured to open and close the fuel supply portion 440 may be provided. The opening and closing lid 441 may be made a configuration of: attaching, for example, a sheet-form member to the upper frame 44 by a hinge member not shown so as to rotate in an up-and-down direction; and closing the fuel supply portion 440 so as to cover the depression 440a.

Thus, by opening the fuel supply opening 440c1 to the fuel supply port member 440c, it is possible in filling the fuel in the fuel tank 1b (see FIG. 1) to make fuel leaking out from around the opening 440c1 stay in the member 440c, and to prevent the fuel from leaking out around the engine-driven work machine 1.

Then, by forming the depression 440a in the upper frame 44 and fixing the fuel supply port member 440c, it is possible to provide the opening and closing lid 441 without the member 440c protruding to the ceiling of the frame 44.

Then, by providing the opening and closing lid 441, it is possible to suppress, for example, the water Wa such as rain water from staying in the depression 440a.

Then, again returning to FIG. 4, the right frame 43 is provided on the right face Ri side of the engine-driven work machine 1. The right frame 43 is, for example, a sheet-form member, is provided openably and closably in the engine-driven work machine 1, and configures an opening and closing door.

In the engine-driven work machine 1 is provided the right frame 43 so as to rotate, for example, around a rotation axis as a center parallel to an edge of the front face Fr side of the frame 43, and to open and close.

Then in the environment adaptive base 2 a locking portion 38 configured to lock a rotation of the right frame 43 is provided at the upper face portion 34a of the side face portion 34 on the right face Ri side.

As shown in FIG. 4, the edge of the front face Fr side of the right frame 43 is supported to universally open and close by a side wall forming the front frame 40 through a hinge member 43a whose up-and-down directional axis is the rotation axis.

The right frame 43 includes a member like a shallow box: a width W2 of a flat face portion 43d thereof is approximately equal to a width of an opening formed between the front frame 40 and the rear frame 41; a height H2 of the portion 43d is approximately equal to a distance between a lower end of a side wall forming the left-open rectangle of the upper frame 44 and the upper face portion 34a of the side face portion 34.

That is, the right frame 43 is formed so as to fit in an opening formed so as to be surrounded by the front frame 40 (see FIG. 4), the rear frame 41(see FIG. 4), the upper frame 44 (see FIG. 4), and the side face portion 34(see FIG. 4), and opens and closes above the portion 34 forming a frame portion.

Moreover, a suction port 43b is open to the flat face portion 43d of the right frame 43. Then, for example, a sound absorbing material including, for example, a sponge sheet or an urethane sheet is configured to be bedded across an approximately whole region like a box.

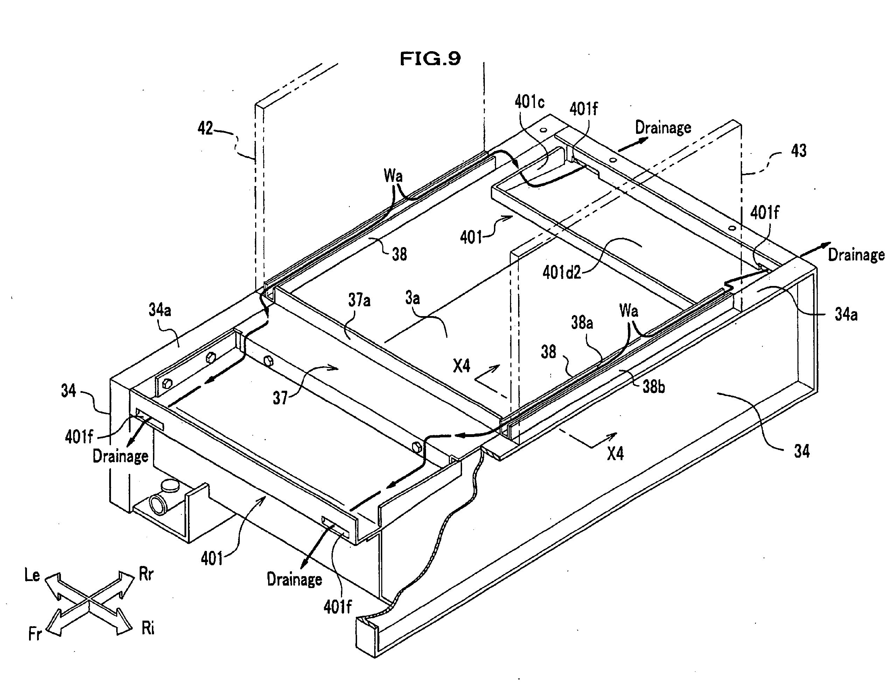

FIG. 9 is a drawing showing a locking portion. As shown in FIG. 9, the locking portion 38 is a long member provided along the longitudinal direction of the upper face portion 34a of the side face portion 34 on the right face Ri side, and locks the rotation of the right frame 43 at a closing position in a state of the frame 43 closing the housing 10.

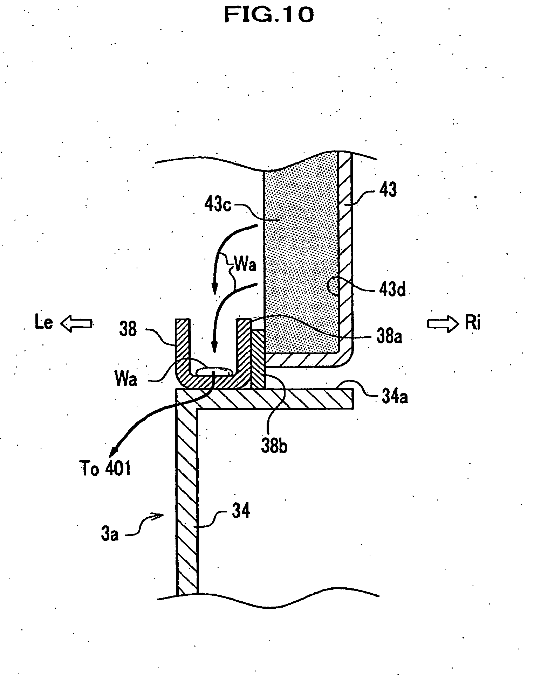

FIG. 10 is an X4-X4 section view in FIG. 9. As shown in FIG. 10, the locking portion 38 is an approximately U-letter shape, and is fixed to the upper face portion 34a of the side face portion 34 so that an upper side of the portion 38 is open.

A method for fixing the locking portion 38 to the upper face portion 34a is not limited, and it is possible to form a water-tight structure between the side face portion 34 and the locking portion 38, for example, by fixing the portion 38 and the portion 34a by continuous welding.

Thus when the locking portion 38 whose section is an approximately U-letter shape is fixed to the upper face portion 34a of the side face portion 34, a rising locking face 38a is formed on the upper face portion 34a, the right frame 43 abuts with the locking face 38a, and the rotation of the frame 43 is locked.

In addition, when a seal member 38b including, for example, a rubber is attached to the locking face 38a, it is possible to improve a sealing performance between the right frame 43 and the locking portion 38.

For example, when the water Wa such as rain water enters from such the suction port 43b (see FIG. 4) of the right frame 43, a part of the water Wa exceeds, as shown in FIG. 10, the locking face 38a of the locking portion 38 in some cases.

According to the embodiment, because the locking portion 38 is formed of an approximately U-letter shape member, even if the water Wa exceeds the locking face 38a, the water Wa stays within an opening of the U-letter shape and does not flow in the leaking substance reservoir 3a formed inside the side face portion 34.

In addition, the section shape of the locking portion 38 is not limited to an approximately U-letter shape; an approximate semicircle and an approximately J-letter shape are also available.

Furthermore, in the embodiment, as shown in FIG. 9, it is configured that: an end of the front face Fr side of the locking portion 38 extends as far as an approximately same position as the raised portion 37a of the guide base 37; and an end of the rear face Rr side extends above the slant portion 401d2 of the water drain guide 401.

Thus because the end of the rear face Rr side extends as far as above the slant portion 401d2 of the water drain guide 401, even if the water Wa staying within the opening of the U-letter shape of the locking portion 38 flows as far as the end of the rear face Rr side, the water Wa is received by the portion 401d2 of the guide 401. Accordingly, without flowing in the leaking substance reservoir 3a, the water Wa is discharged to the rear face Rr side as drainage from the drain ports 401f of the drain guide 401.

Furthermore, because the end of the front face Fr side of the locking portion 38 extends as far as an approximately same position as the raised portion 37a of the guide base 37, even if the water Wa staying within the opening of the U-letter shape of the locking portion 38 flows as far as the end of the front face Fr side, the water Wa is received by the flat face portion 37b of the guide base 37. Accordingly, without flowing in the leaking substance reservoir 3a, the water Wa is discharged as drainage from the drain ports 401f of the drain guide 401.

Thus described, the engine-driven work machine 1 (see FIG. 1) of the embodiment comprises the guide base 37 (see FIG. 4) and the drain guide 401 (see FIG. 4) on the front face Fr side of the environment adaptive base 2 (see FIG. 4).

The guide base 37 comprises the flat face portion 37b (see FIG. 2A) of a water receiver, and can make the water Wa received by the portion 37b flow to the slant portion 401d2 of the drain guide 401 (see FIG. 5).

Furthermore, the drain guide 401 comprises the slant portion 401d2 and flat portion 401d1 (see FIG. 5) of a water receiver and the drain ports 401f (see FIG. 5), and can make the water Wa, which is received by the portion 401d2, and the water Wa, which flows in the portion 401d2 from the flat face portion 37b of the guide base 37, to the flat portion 401d1.

Thus the drain guide 401 can discharge the water Wa flowing in the flat portion 401d1 from the drain ports 401f as drainage to the front face Fr side.

According to this structure, it is possible to discharge the water Wa such as rain water as drainage, which the water Wa flows inside the housing 10, for example, from the hollow portion of the front frame 40 (see FIG. 4) without making the water Wa flow in the leaking substance reservoir 3a (see FIG. 4).

Accordingly, the rain water entering prevention structure of the engine-driven work machine 1 of the embodiment brings an excellent effect of being able to prevent a leaking substance from leaking out without increasing a reserved amount thereof in the leaking substance reservoir 3a.

Furthermore, the drain guide 401 (see FIG. 4) is provided on the rear face Rr side of the environment adaptive base 2 (see FIG. 4).

According to this structure, it is possible to discharge the water Wa such as rain water to the rear face Rr side, which the water Wa enters inside the housing 10 from a gap between the rear frame 41 (see FIG. 4) and other member such as the left frame 42 (see FIG. 4), without making the water Wa flow in the leaking substance reservoir 3a.

Accordingly, the rain water entering prevention structure of the engine-driven work machine 1 of the embodiment brings the excellent effect of being able to prevent a leaking substance from leaking out without increasing a reserved amount thereof in the leaking substance reservoir 3a.

Furthermore, the drain ports 440g (see FIG. 8) are formed between the depression 440a (see FIG. 8) around the fuel supply portion 440 formed in the upper frame 44 (see FIG. 4) and the depression groove 440d (see FIG. 8).

According to this structure, it is possible to discharge the water Wa such as rain water, which stays in the depression 440a, as drainage through the depression groove 440d.

Accordingly, it is possible to suppress the water Wa such as rain water, which stays in the depression 440a of the upper frame 44, from entering inside the housing 10, and to discharge the water Wa without making it flow in the leaking substance reservoir 3a (see FIG. 4). Accordingly, the rain water entering prevention structure of the engine-driven work machine 1 of the embodiment brings the excellent effect of being able to prevent a leaking substance from leaking out without increasing a reserved amount thereof in the leaking substance reservoir 3a.

Moreover, the locking portion 38 (see FIG. 4) of the right frame 43 (see FIG. 4) forming an opening and closing door is formed of a member whose section is an approximately U-letter shape, the end of the front face Fr side is extended as far as above the guide base 37, and the end of the rear face Rr side is extended as far as above the drain guide 401.

According to this structure, it is possible to make the water Wa such as rain water, which enters via the right frame 43, stay in a U-letter-shape opening. Moreover, even if the water Wa flows through the locking portion 38, it is possible to discharge the water Wa via the drain guide 401 without making the water Wa flow in the leaking substance reservoir 3a (see FIG. 4).

Accordingly, the rain water entering prevention structure of the engine-driven work machine 1 of the embodiment brings the excellent effect of being able to prevent a leaking substance from leaking out without increasing a reserved amount thereof in the leaking substance reservoir 3a.

Thus the rain water entering prevention structure of the engine-driven work machine 1 of the embodiment brings the excellent effect of being able to prevent the water Wa such as rain water entering from outside from entering in the leaking substance reservoir 3a, to suppress a leaking substance reserved in the reservoir 3a from increasing, and to prevent the leaking substance from leaking out.

## Claims

1. A rain water entering prevention structure for an engine-driven work machine (1) including an engine (1a) and a work machine-main-body (1c), wherein the rain water entering prevention structure comprises a base (2), a housing (10) fixed to the base (2), the housing (10) accommodates the engine (1a) arranged on one side of the base (2), and the work machine-main-body (1c) arranged on the other side of the base (2) and driven by the engine (1a), the base (2) having a leaking substance reservoir (3a) including a floor plate (31) and frame members (32, 33, 34, 34) provided around the floor plate (31), wherein
the structure comprises drain members (37, 401) below any of an opening and a gap formed in the housing (10),
wherein rain water (Wa) enters inside the housing (10) from any of the opening and the gap, **characterized in that** in use
the drain members (37, 401) discharge the rain water (Wa) outside the housing (10) without making the rain water (Wa) flow in the leaking substance reservoir (3a).

2. The rain water entering prevention structure according to claim 1, wherein the drain members (37, 401) comprise water receivers (37b, 401d) configured to receive the rain water (Wa) entering inside the housing (10) from any of the opening and the gap so as not to make the rain water (Wa) flow in the leaking substance reservoir (3a); and a drain port (401f) configured to discharge the rain water (Wa) received by the water receivers (37b, 401d) outside the housing (10).

3. The rain water entering prevention structure according to claim 2, wherein the drain members (37, 401) are provided below any of the opening and the gap on the one side of the base (2), and the drain port (401f) discharges the rain water (Wa) received by the water receivers (37b, 401d) toward the one side of the base (2).

4. The rain water entering prevention structure according to claim 2 or 3, wherein drain members (37, 401) are provided below any of the opening and the gap on the other side of the base (2), and the drain port (401f) discharges the rain water (Wa) received by the water receivers (37b, 401d) toward the other side of the base (2).

5. The rain water entering prevention structure according to any one of claims 2 to 4,
wherein in the housing (10) a side face between the one side and the other side of the base (2) opens and closes above the frame member (34), and forms an opening and closing door (43),
wherein in the frame member (34) a member presenting an approximately U-letter shape is open on an upper side of the member and is extendedly provided from the one side to the other side of the base (2), and an locking portion (38) is formed so as to lock the opening and closing door (43) at a closing position, and
wherein at least one of ends of the locking portion (38) is positioned above the water receiver (401d) of the drain member (401).

6. A rain water entering prevention structure for an engine-driven work machine (1) including an engine (1a), a fuel tank (16) and a work machine-main-body (1c), wherein the rain water entering prevention structure comprises: a housing (10) which in use accommodates the engine (1a), the fuel tank (1b) for supplying fuel to the engine (1a), and the work machine-main-body (1c) driven by the engine (1a); and where an exhaust outlet (44a), a depression groove (440d) in which a hook member is arranged, and a depression (440a) in which a fuel supply port (440b) for filling the fuel in the fuel tank (16) is open are formed in a ceiling of the housing (10), wherein
the depression groove (440d) is formed to extend from one end to the other end across the ceiling; and the exhaust outlet (44a) and the depression (440a) are formed at positions across the depression groove (440d) from each other, wherein further the depression (440a) communicates with the depression groove (440d).

7. The rain water entering prevention structure according to claim 6, wherein the depression groove (440d) is formed more deeply than the depression (440a).

## Patentansprüche

1. Struktur zum Verhindern des Eindringens von Regenwasser für eine kraftmaschinenbetriebene Arbeitsmaschine (1), die eine Kraftmaschine (1a) und einen Arbeitsmaschinen-Hauptkörper (1c) umfasst, wobei die Struktur zum Verhindern des Eindringens von Regenwasser eine Basis (2) und ein an der Basis (2) befestigtes Gehäuse (10) umfasst, das Gehäuse (10) die auf einer Seite der Basis (2) angeordnete Kraftmaschine (1 a) und den auf der anderen Seite der Basis (2) angeordneten und von der Kraftmaschine (1a) angetriebenen Arbeitsmaschinen-Hauptkörper (1c) unterbringt, wobei die Basis (2) einen Behälter (3a) für auslaufende Substanzen aufweist, der eine Bodenplatte (31) und um die Bodenplatte (31) bereitgestellte Rahmenelemente (32, 33, 34, 34) aufweist, wobei
die Struktur Abflusselemente (37, 401) unter beliebigen von einer Öffnung und einem Spalt, die bzw. der in dem Gehäuse (10) gebildet sind, umfasst,
wobei Regenwasser (Wa) von beliebigen der Öffnung und des Spalts in das Gehäuse (10) eindringt, **dadurch gekennzeichnet, dass** im Einsatz
die Abflusselemente (37, 401) das Regenwasser (Wa) nach außerhalb des Gehäuses (10) abführen, ohne das Regenwasser (Wa) in den Behälter (3a) für auslaufendes Substanzen fließen zu lassen.

2. Struktur zum Verhindern des Eindringens von Regenwasser nach Anspruch 1, wobei die Abflusselemente (37, 401) Wasserauffangbehälter (37b, 401 d) umfassen, die dazu ausgebildet sind, das Regenwasser (Wa) aufzufangen, das von beliebigen der Öffnung und des Spalts in das Gehäuse (10) eindringt, um das Regenwasser (Wa) nicht in den Behälter (3a) für auslaufende Substanzen fließen zu lassen; und eine Abflussöffnung (401f) umfassen, die dazu ausgebildet ist, das von den Wasserauffangbehältern (37b, 401d) aufgefangene Regenwasser (Wa) nach außerhalb des Gehäuses (10) abzuführen.

3. Struktur zum Verhindern des Eindringens von Regenwasser nach Anspruch 2, wobei die Abflusselemente (37, 401) unter beliebigen der Öffnung und des Spalts auf der einen Seite der Basis (2) vorgesehen sind und die Abflussöffnung (401 f) das von den Wasserauffangbehältern (37b, 401 d) aufgefangene Regenwasser (Wa) zu der einen Seite der Basis (2) hin abführt.

4. Struktur zum Verhindern des Eindringens von Regenwasser nach Anspruch 2 oder 3, wobei die Abflusselemente (37, 401) unter beliebigen der Öffnung und des Spalts auf der anderen Seite der Basis (2) vorgesehen sind und die Abflussöffnung (401 f) das von den Wasserauffangbehältern (37b, 401 d) aufgefangene Regenwasser (Wa) zu der anderen Seite der Basis (2) hin abführt.

5. Struktur zum Verhindern des Eindringens von Regenwasser nach einem der Ansprüche 2 bis 4,
wobei in dem Gehäuse (10) eine Seitenfläche zwischen der einen Seite und der anderen Seite der Basis (2) über dem Rahmenelement (34) öffnet und schließt und eine öffnende und schließende Tür (43) bildet,
wobei in dem Rahmenelement (34) ein ungefähr die Form eines Buchstabens U darstellendes Element auf einer Oberseite des Elements offen ist und derart vorgesehen ist, dass es sich von der einen Seite zu der anderen Seite der Basis (2) erstreckt, und ein Verriegelungsabschnitt (38) gebildet ist, um die öffnende und schließende Tür (43) in einer schließenden Stellung zu verriegeln, und
wobei mindestens eines der Enden des Verriegelungsabschnitts (38) über dem Wasserauffangbehälter (401 d) des Abflusselements (401) positioniert ist.

6. Struktur zum Verhindern des Eindringens von Regenwasser für eine kraftmaschinenbetriebene Arbeitsmaschine (1), die eine Kraftmaschine (1a), einen Kraftstoffbehälter (1 b) und einen Arbeitsmaschinen-Hauptkörper (1 c) umfasst, wobei die Struktur zum Verhindern des Eindringens von Regenwasser Folgendes umfasst:
ein Gehäuse (10), das im Einsatz die Kraftmaschine (1a), den Kraftstoffbehälter (1 b) zum Zuführen von Kraftstoff zu der Kraftmaschine (1a) und den von der Kraftmaschine (1a) angetriebenen Arbeitsmaschinen-Hauptkörper (1 c) unterbringt, und wobei ein Abgasauslass (44a), eine Vertiefungsrille (440d), in der ein Hakenelement angeordnet ist und eine Vertiefung (440a), in der eine Kraftstoffzufuhröffnung (440b) zum Einfüllen des Kraftstoffs in den Kraftstoffbehälter (1 b) offen ist, in einer Decke des Gehäuses (10) gebildet sind, wobei
die Vertiefungsrille (440d) derart gebildet ist, dass sie sich von einem Ende zum Anderen über die Decke erstreckt und der Abgasauslass (44a) und die Vertiefung (440a) an die Vertiefungsrille (440d) querenden Positionen voneinander entfernt gebildet sind, wobei weiter die Vertiefung (440a) mit der Vertiefungsrille (440d) in Verbindung steht.

7. Struktur zum Verhindern des Eindringens von Regenwasser nach Anspruch 6, wobei die Vertiefungsrille (440d) tiefer gebildet ist als die Vertiefung (440a).

## Revendications

1. Structure pour la prévention d'entrée d'eau de pluie pour une machine de travail entraînée par moteur (1) incluant un moteur (1a) et un corps principal de machine de travail (1c), dans laquelle la structure pour la prévention d'entrée d'eau de pluie comprend une base (2), un carter (10) fixé à la base (2), le carter (10) logeant le moteur (1a) agencé sur un côté de la base (2), et le corps principal de machine de travail (1c) étant agencé de l'autre côté de la base (2) et entraîné par le moteur (1a), la base (2) ayant un réservoir de fuite (3a) incluant une plaque de fond (31) et des éléments de châssis (32, 33, 34, 34) disposés autour de la plaque de fond (31), dans laquelle
la structure comprend des éléments d'écoulement (37, 401) au-dessous de l'un quelconque d'une ouverture et d'un espacement formés dans le carter (10),
dans laquelle l'eau de pluie (Wa) pénètre à l'intérieur du carter (10) à partir de l'un quelconque de l'ouverture et de l'espacement, **caractérisée en ce que**, en fonctionnement
les éléments d'écoulement (37, 401) déchargent l'eau de pluie (Wa) à l'extérieur du carter (10) sans que l'eau de pluie (Wa) ne s'écoule dans le réservoir de fuite (3a).

2. Structure pour la prévention d'entrée d'eau de pluie selon la revendication 1, dans laquelle les éléments d'écoulement (37, 401) comprennent des récepteurs d'eau (37b, 401d) configurés pour recevoir l'eau de pluie (Wa) pénétrant à l'intérieur du carter (10) à partir de l'un quelconque de l'ouverture et de l'espacement de façon à ce que l'eau de pluie (Wa) ne s'écoule pas dans le réservoir de fuite (3a) ; et un orifice d'écoulement (401f) configuré pour décharger à l'extérieur du carter (10) l'eau de pluie (Wa) reçue par les récepteurs d'eau (37b, 401d).

3. Structure pour la prévention d'entrée d'eau de pluie selon la revendication 2, dans laquelle les éléments d'écoulement (37, 401) sont disposés au-dessous de l'un quelconque de l'ouverture et de l'espacement d'un côté de la base (2), et l'orifice d'écoulement (401f) décharge l'eau de pluie (Wa), reçue par les récepteurs d'eau (37b, 401d), vers ce côté de la base (2).

4. Structure pour la prévention d'entrée d'eau de pluie selon la revendication 2 ou 3, dans laquelle des éléments d'écoulement (37, 401) sont disposés au-dessous de l'un quelconque de l'ouverture et de l'espacement de l'autre côté de la base (2), et l'orifice d'écoulement (401f) décharge l'eau de pluie (Wa), reçue par les récepteurs d'eau (37b, 401d), vers cet autre côté de la base (2).

5. Structure pour la prévention d'entrée d'eau de pluie selon l'une quelconque des revendications 2 à 4,
dans laquelle, dans le carter (10), une face latérale entre un côté particulier et l'autre côté de la base (2) s'ouvre et se ferme au-dessus de l'élément de châssis (34), et forme une trappe d'ouverture et de fermeture (43),
dans laquelle, dans l'élément de châssis (34), un élément présentant approximativement une forme de U est ouvert sur un côté supérieur de l'élément et est disposé de manière étendue depuis le côté particulier jusqu'à l'autre côté de la base (2), et une partie de verrouillage (38) est formée de façon à verrouiller la trappe d'ouverture et de fermeture (43) dans une position de fermeture, et
dans laquelle au moins une des extrémités de la partie de verrouillage (38) est positionnée au-dessus du récepteur d'eau (401d) de l'élément d'écoulement (401).

6. Structure pour la prévention d'entrée d'eau de pluie pour une machine de travail entraînée par moteur (1) incluant un moteur (1a), un réservoir de carburant (1b) et un corps principal de machine de travail (1c), dans laquelle la structure pour la prévention d'entrée d'eau de pluie comprend : un carter (10) qui loge le moteur (1a), le réservoir de carburant (1b) pour fournir du carburant au moteur (1a), et le corps principal de machine de travail (1c) entraîné par le moteur (1a) ; et où un orifice d'échappement (44a), une rainure de dépression (440d) dans laquelle un élément formant crochet est agencé, et une dépression (440a) dans laquelle un orifice d'alimentation en carburant (440b) pour remplir le carburant dans le réservoir de carburant (1b) est ouvert, sont formés dans un plafond du carter (10), dans lesquels
la rainure de dépression (440d) est formée pour s'étendre d'une extrémité à l'autre extrémité d'un bout à l'autre du plafond ; et l'orifice d'échappement (44a) et la dépression (440a) sont formés à des positions de part et d'autre de la rainure de dépression (440d), dans laquelle en outre
la dépression (440a) communique avec la rainure de dépression (440d).

7. Structure pour la prévention d'entrée d'eau de pluie selon la revendication 6, dans laquelle la rainure de dépression (440d) est formée plus profondément que la dépression (440a).
